Europäisches Patentamt

(19) European Patent Office     (11) Publication number: **0 096 696**

Office européen des brevets                    **B1**

(12)     **EUROPEAN PATENT SPECIFICATION**

(45) Date of publication of patent specification: 25.03.87     (51) Int. Cl.⁴: **G 01 N 21/17, G 01 N 21/35, G 01 W 1/11**

(21) Application number: **83900190.6**

(22) Date of filing: **22.12.82**

(86) International application number: **PCT/FI82/00067**

(87) International publication number: **WO 83/02326 07.07.83 Gazette 83/16**

(54) **METHOD AND APPARATUS FOR MEASURING MOISTURE CONTENT.**

(30) Priority: **23.12.81 FI 814150**

(43) Date of publication of application:
**28.12.83 Bulletin 83/52**

(45) Publication of the grant of the patent:
**25.03.87 Bulletin 87/13**

(84) Designated Contracting States:
**DE FR GB SE**

(56) References cited:
**CH-A- 528 079**
**CH-A- 620 108**
**US-A-3 141 094**
**US-A-3 263 553**
**US-A-3 557 619**
**US-A-3 636 768**

(73) Proprietor: **VALTION TEKNILLINEN TUTKIMUSKESKUS**
**Vuorimiehentie 5**
**SF-02150 Espoo 15 (FI)**

(72) Inventor: **LAMMASNIEMI, Jorma**
**Maljatie 5**
**SF-90250 Oulu 25 (FI)**
Inventor: **HUTTUNEN, Paavo**
**Vesipääskyntie 1 D**
**SF-90540 Oulu 54 (FI)**
Inventor: **HYVARINEN, Timo**
**Lahnatie 4 B 14**
**SF-90550 Oulu 55 (FI)**

(74) Representative: **Zipse + Habersack**
**Kemnatenstrasse 49**
**D-8000 München 19 (DE)**

Courier Press, Leamington Spa, England.

## Description

The present invention relates to an apparatus for measuring the moisture content, in a given material, by backscatter of infra-red radiation therefrom.

The measuring of moisture content by means of a method which is based on the backscattering of infrared radiation is generally known in the prior art, and in commercial distribution there are several devices which are operated according to the said method. These methods are, however, designed to measure the moisture content of a given material without touching the material itself, and the measurement is carried out by means of such equipment which is typically designed to be permanently installed in connection to a conveyor band. The moisture content of any material can differ remarkably between the surface and the inside, and this is a drawback when the measuring takes place on the surface. Moreover, a method which measures a given material without touching it is sensitive to any interference caused by surrounding radiation, and consequently cannot be applied to portable apparatuses.

Several different methods have been experimented for measuring the moisture content of a given material within the material itself; among them can be mentioned for instance a method which is based on the measuring of the dielectric constant, and a method which is based on microwave absorption. All of these methods include, however, certain drawbacks from the point of view of operation accuracy, construction costs of work safety.

US Patent 3 263 553 discloses an optical analyzer in the form of a compact unit capable of being immersed into and withdrawn out of a liquid sample. A light source is located within said unit and upon immersion light is then passed from light source through a filter, a glass tube, through the sample, and reflected to a light-sensing element capable of converting the optical measurement into an electrical signal.

CH-Patent 620 106 discloses a catheter instrument where the liquid under test is blood. Light is conducted to and from the test zone through optical fibres of the catheter and is back-scattered by the blood cells.

The purpose of the present invention is to achieve an apparatus which allows for a reliable, simple and accurate measuring of the moisture content in a given material with the measuring operation taking place within the said material.

The purpose of the present invention is achieved by means of an apparatus as claimed.

By employing the apparatus according to the invention with the electrical modulation of the radiation source and a two or more channeled infrared detector it is possible to make both the optical and the mechanical structure of the measuring apparatus simpler, more durable and better suited for field use than prior art measuring apparatuses based on the back-scattering of infrared radiation.

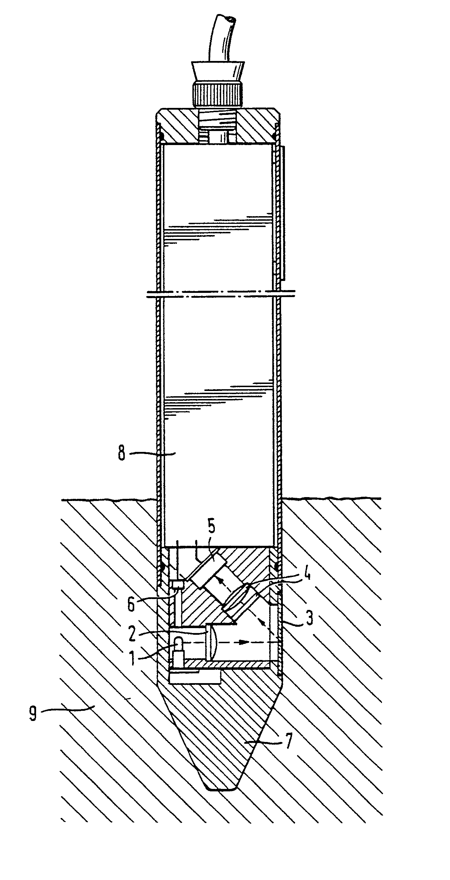

In the following the apparatus is described with reference to the appended drawing, where is shown a cross-section view of one preferred embodiment of the invention.

Infrared radiation is transmitted from the radiation source 1 within a measuring head 7 to the lens or lenses 2 and through the lens or window 3 right into the material 9 to be examined. The measuring head 7 of the apparatus penetrates so deep into the said material, that the whole window or lens 3 is covered by the material 9. The infrared radiation which is scattered back from the material 9 is directed through the window or lens 3 and further through the lens or lenses 4 into a two-channelled infrared detector 5. The electric signal received from the infrared detector 5 is processed in the electronic controlling and analyzing unit 8, which is electrically synchronised with the modulation signal of the source 1 so as to indicate the moisture content.

The infrared radiation source 1 is modulated electrically and the intensity of the modulated radiation is stabilized on the basis of the signal received from the reference detector 6 which is located within said measuring head to receive radiation directly from said source 1. The infrared detector 5 comprises two separate infrared detector elements located within said measuring head, each of the said elements having a separate interference filter, and a temperature-dependent member. The interference filters are used for separating the relevant wavelengths, which are to be analyzed in the measurement, from the infrared radiation scattering back from the material 9 under examination. The temperature-dependent member is used for observing the temperature of the infrared detector 5, and, if necessary, for adjusting the temperature dependence of the electric signal received from the detector 5.

## Claim

An apparatus for measuring moisture content in a given material (9) by backscatter of infra-red radiation therefrom, characterised by a measuring head (7) to be pushed inside said material, a source (1) of infrared radiation which source is located within said measuring head, means (2, 3) for directing the radiation into the material and means (4, 5, 8) for detecting and analyzing the infrared radiation which is scattered back from the material, in order to indicate the moisture content, said radiation source (1) being modulated electrically and its intensity being stablized on the basis of a feedback signal received from a reference detector (6) which is located within said measuring head to receive radiation directly from said source (1) and said radiation detecting and analyzing means (4, 5, 8), which is electrically synchronized with the modulation signal of the source, consisting of at least two separate infrared detector elements, located within said measuring head, each element having its own optical interference filter, and a temperature-dependent member, which is operative to adjust the signal from the detecting means in dependence on temperature variations of said detector elements.

## Patentanspruch

Vorrichtung zum Messen des Feuchtigkeitsgehalts in einem gegebenen Material (9) durch Zurückwerfen einer Infrarotstrahlung von diesem Material, gekennzeichnet durch einen in das Material zu stoßenden Meßkopf (7), eine innerhalb des Meßkopfs angeordnete Infrarrotquelle (1), eine Einrichtung (2, 3) zum Richten der Strahlen in das Material und durch eine Einrichtung (4, 5, 8) zum Ermitteln und Analysieren der vom Material zurückgeworfenen Infrarotstrahlung zwecks Angabe des Feuchtigkeitsgehalts, wobei die Strahlungsquelle (1) elektrisch moduliert ist und ihre Intensität auf der Basis eine Rückkupplungssignals, das von einem zum Empfang von Strahlung direkt von der Quelle (1) innerhalb des Meßkopfs angeordneten Referenzdetektor (6) stabilisiert ist, und wobei die Einrichtung (4, 5, 8) zum Ermitteln und Analysieren der Strahlung, die mit dem Modulationssignal der Quelle elektrisch synchronisiert ist, aus zumindest zwei getrennten Infrarotdetektorelementen besteht, die innerhalb des Meßkopfs angeordnet sind, wobei jedes Element seinen eigenen optischen Interferenzfilter aufweist, und mit einem temperaturabhängigen Glied, das vorgesehen ist, um das Signal von der Detektoreinrichtung in Abhängigkeit von Temperaturveränderungen dieses Detektorelements einzustellen.

## Revendication

Appareil à mesurer la teneur un humidité d'une matière donnée (9) par rétrodiffusion de rayonnement infrarouge depuis celle-ci, caractérisé par une tête de mesure (7) à pousser à l'intérieur de la matière, une source (1) de rayonnement infrarouge, laquelle source est située à l'intérieur de la tête de mesure, des moyens (2, 3) pour diriger le rayonnement dans la matière et des moyens (4, 5, 8) pour détecter et analyser le rayonnement infrarouge qui est rétrodiffusé depuis la matière afin d'indiquer la teneur en humidité, la source de rayonnement (1) étant modulée électriquement et son intensité étant stabilisée sur la base d'un signal de réaction reçu d'un détecteur de référence (6) qui est situé à l'intérieur de la tête de mesure pour recevoir du rayonnement directement de la source (1), et les moyens de détection et d'analyse de rayonnement (4, 5, 8), qui sont synchronisés électriquement avec le signal de modulation de la source, étant formés d'au moins deux éléments détecteurs d'infrarouge séparés situés à l'intérieur de la tête de mesure, chaque élément ayant son propre filtre optique interférentiel, et un organe dépendant de la température qui est capable d'ajuster le signal venant des moyens de détection sous la dépendance de variations de température des éléments détecteurs.